# EUROPÄISCHE PATENTANMELDUNG

(11) **EP 2 399 659 A2**
(43) Veröffentlichungstag der Anmeldung: **28.12.2011**
(21) Anmeldenummer: 11450084.6
(22) Anmeldetag: 22.06.2011
(51) Int. Cl.: B01D 17/02

(54) **Einlaufteil für Leichtflüssigkeitsabscheider**

(30) Priorität: 22.06.2010 AT 10322010
(71) Anmelder: Purator International GmbH, 1050 Wien (AT)
(72) Erfinder: Preis, Philipp Christopher, 1090 Wien (AT)
(74) Vertreter: Sonn & Partner Patentanwälte

(57) **Zusammenfassung**

Einlaufteil (6) zum Einleiten eines Flüssigkeitsgemischs in einen Leichtflüssigkeitsabscheider (1), der einen Behälter (2) mit einer gekrümmten, insbesondere im Wesentlichen zylindrischen, Behälterwand (3) aufweist, die mit einem Boden (4) eine Abscheidekammer (5) einschließt, mit einem im Wesentlichen L-förmigen Einlaufrohrknie (18), das einen in der Betriebsstellung durch die Behälterwand (3) durchragenden Abschnitt (18') aufweist, an den ein in Richtung des Bodens (4) des Behälters (2) abgebogener Abschnitt (18'') anschließt, wobei in Strömungsrichtung an das Einlaufrohrknie (18) ein Umlenkrohrabschnitt (20) anschließt, wobei eine Längserstreckungsachse (22'') eines Endabschnitts (22) des Umlenkrohrabschnitts (20) in der Betriebsstellung im Wesentlichen in Umfangsrichtung der Behälterwand (3) verläuft, so dass das Flüssigkeitsgemisch tangential in den Behälter (2) einleitbar ist.

## Beschreibung

Die Erfindung betrifft ein Einlaufteil zum Einleiten eines Flüssigkeitsgemischs in einen Leichtflüssigkeitsabscheider, der einen Behälter mit einer gekrümmten, insbesondere im Wesentlichen zylindrischen, Behälterwand aufweist, die mit einem Boden eine Abscheidekammer einschließt, mit einem im Wesentlichen L-förmigen Einlaufrohrknie, das einen in der Betriebsstellung durch die Behälterwand durchragenden Abschnitt aufweist, an den ein in Richtung des Bodens des Behälters abgebogener Abschnitt anschließt. Weiters betrifft die Erfindung einen Flüssigkeitsabscheider mit einem Behälter, der eine gekrümmte, insbesondere im Wesentlichen zylindrische, Behälterwand aufweist, die mit einem Boden eine Abscheidekammer einschließt.

Leichtflüssigkeitsabscheideranlagen können an Schmutzwasserleitungen angeschlossen werden, um mineralische Leichtflüssigkeiten, insbesondere Öle bzw. Benzin, abzuscheiden, welche nach geltenden Normen nicht in das öffentliche Kanalnetz eingeleitet werden dürfen. In Österreich wird beispielsweise durch die ÖNORM B 5101 bzw. ÖNÖRM EN 858 vorgeschrieben, dass durch mineralische Leichtflüssigkeiten verunreinigtes Regenwasser bzw. Schmutzwasser unter Einhaltung bestimmter Grenzwerte gereinigt werden muss. Derartige Leichtflüssigkeitsabscheideanlagen bzw. Ölabscheider beruhen auf der schweren Mischbarkeit bzw. Unterschieden in der spezifischen Dichte von mineralischen Leichtflüssigkeiten und Wasser. Auf dem Prinzip der Schwerkraftabscheidung beruhende Abscheider sammeln die spezifisch leichteren Flüssigkeiten an der Oberfläche des Flüssigkeitsgemisches, von der sie abgesaugt und entsorgt werden können. In sogenannten Klasse I- bzw. Koaleszenzabscheidern wird zudem das Prinzip der Koaleszenz angewandt, bei dem das Zusammenfließen von kleineren Ölpartikeln zu größeren Öltropfen begünstigt wird, um auch kleinste Öltröpfchen nach dem Schwerkraftprinzip an der Oberfläche zu sammeln und von dort abzutrennen.

Aus der DE 200 11 525 U1 ist ein derartiger Leichtflüssigkeitsabscheider bekannt, welcher aus einem als Stahlbetonfertigbauteil ausgebildeten Behälter mit einer zylindrischen Außenwand und einer Sohle besteht, die gemeinsam eine Abscheidekammer einschließen. Das Leicht-/Schwerflüssigkeitsgemisch wird über einen Zulauf auf der einen Seite des Behälters eingeleitet. Das von der Leichtflüssigkeit befreite Flüssigkeitsgemisch kann auf der gegenüberliegenden Seite über einen Auslauf abgeleitet werden. Der Zulauf weist ein horizontal angeordnetes Zulaufrohr auf, das durch die Außenwand des Behälters durchragt und sich im Inneren des Behälters als vertikal angeordnetes Tauchrohr fortsetzt, welches in die Abscheidekammer mündet. Solche rohrknieartige Zulaufteile dienen einerseits zum Einleiten des Flüssigkeitsgemischs in den an die Sohle anschließenden Bereich der Abscheidekammer und zudem als Geruchsverschluss gegenüber der Kanalzuleitung. Diese Aufgaben werden durch die bekannten Zulaufteile zuverlässig erfüllt. Die Funktion des Abscheiders an sich wird durch diese Zulaufteile jedoch nicht unterstützt.

In der DE 43 06 807 A1 ist ein Leichtflüssigkeitsabscheider mit einem einen kreisrunden Querschnitt aufweisenden Gehäuse beschrieben. Das Gehäuse ist mit einem Einlauf verbunden, der durch ein horizontales Einlaufrohr und ein vertikales Fallrohr gebildet ist; am freien Ende des Fallrohrs ist ein rinnenförmiges Prallelement angeordnet, welches einen U-förmigen Querschnitt aufweist und stirnseitig offen ist.

Aus der DE 197 20 338 A1 ist ein Leichtflüssigkeitsabscheider mit einem andersartigen Zulauf ohne Ausbildung eines Rohrknies bekannt.

Demgegenüber besteht die Aufgabe der vorliegenden Erfindung darin, einen konstruktiv einfachen, kostengünstig herstellbaren Einlaufteil der eingangs angeführten Art zu schaffen, welcher das Abscheiden von Leichtflüssigkeiten in einem Leichtflüssigkeitsabscheider verbessert.

Dies wird beim Einlaufteil der eingangs angeführten Art dadurch erzielt, dass in Strömungsrichtung an das Einlaufrohrknie ein Umlenkrohrabschnitt anschließt, wobei eine Längserstreckungsachse eines Endabschnitts des Umlenkrohrabschnitts in der Betriebsstellung im Wesentlichen in Umfangsrichtung der Behälterwand verläuft, so dass das Flüssigkeitsgemisch tangential in den Behälter einleitbar ist.

Somit wird das Flüssigkeitsgemisch im Anschluss an das bekannte, im Wesentlichen L-förmige Einlaufrohrknie im Umlenkrohrabschnitt umgelenkt, so dass das Flüssigkeitsgemisch durch den in Umfangsrichtung benachbart der Behälterwand verlaufenden Endabschnitt des Umlenkrohrabschnitts tangential in den Behälter eingeleitet wird. Im Unterschied zu den bekannten Einlaufteilen, bei denen das Flüssigkeitsgemisch im Wesentlichen in vertikaler Richtung im Bereich des Behälterbodens eingeleitet wird, folgt die Längserstreckungsachse des in die Abscheidekammer mündenden Endabschnitts des Umlenkrohrabschnitts des erfindungsgemäßen Einlaufteils im Wesentlichen dem gekrümmten Verlauf der Behälterwand, so dass das Flüssigkeitsgemisch tangential in das Behälterinnere eingeleitet wird. Beim Einleiten des Flüssigkeitsgemischs in tangentialer Richtung bzw. in Umfangsrichtung des Behälters wird die in der Abscheidekammer vorgehaltene Flüssigkeitssäule in Rotation versetzt, wodurch vorteilhafterweise die Absetzwege des Flüssigkeitsgemischs verlängert werden. Demnach können die Leichtflüssigkeiten bzw. etwaig vorhandene Feststoffe, die ebenfalls abgeschieden werden sollen, in kürzeren Zeitintervallen und mit erhöhter Effizienz aus den zur Ableitung ins Kanalnetz geeigneten Schwerflüssigkeiten, d.h. insbesondere Wasser, abgeschieden werden. Der Endabschnitt des Einlaufteils ist dabei vorzugsweise in der Nähe des Behälterbodens angeordnet, so dass beim Einleiten des Flüssigkeitsgemischs lediglich bodennahe bzw. mittlere Schichten der Flüssigkeitssäule in Rotation versetzt werden. Dies hat den Vorteil, dass die bereits an den oberflächennahen Schichten der Flüssigkeitssäule abgeschiedenen Leichtflüssigkeiten durch das Einleiten des Flüssigkeitsgemischs nicht gestört werden. Demnach wird ein für die Effizienz des Abscheidens nachteiliges Aufwühlen der Flüssigkeitsoberfläche und somit ein Emulgieren der Leichtflüssigkeiten in Feinstpartikel, deren Steiggeschwindigkeit nicht zur Konzentration an der Flüssigkeitsoberfläche ausreicht, zuverlässig verhindert. Der erfindungsgemäße Einlaufteil übernimmt somit unmittelbar Funktionen des Reinigungsvorgangs, wodurch im Betrieb die Effizienz gegenüber Abscheidern mit herkömmlichen Zulaufteilen erheblich erhöht wird.

Um den Flüssigkeitskörper in der Abscheidekammer in eine möglichst gleichmäßige, im Wesentlichen laminare Strömung zu versetzen, ist es günstig, wenn der Endabschnitt des Umlenkrohrabschnitts im Wesentlichen entsprechend der zylindrischen Behälterwand bogenförmig, insbesondere im Wesentlichen kreisbogenförmig, gekrümmt ist. Der in die Abscheidekammer mündende Endabschnitt des Umlenkrohrabschnitts weist demnach einen zur zylindrischen Behälterwand passenden gekrümmten Verlauf auf, so dass das Flüssigkeitsgemisch in Umfangsrichtung der Behälterwand in die Abscheidekammer strömt.

Zur Umlenkung des Flüssigkeitsgemischs von dem L-förmigen Einlaufrohrknie in den anschließenden Umlenkrohrabschnitt ist es von Vorteil, wenn das Flüssigkeitsgemisch im Wesentlichen um 90° umgelenkt wird. Diese Umlenkung des Flüssigkeitsgemischs kann insbesondere durch einen knieförmig gebogenen Verbindungsabschnitt erzielt werden, in dem die Längserstreckungsachse des Einlaufteils einen im Wesentlichen bogenförmig gekrümmten Verlauf aufweist.

Um den Strömungsquerschnitt des Flüssigkeitsgemischs beim Austritt aus dem Endabschnitt des Umlenkrohrabschnitts an die gekrümmte Behälterwand anzugleichen und Turbulenzen zu vermeiden, ist es günstig, wenn eine der Behälterwand zugewandte Seite des Umlenkrohrabschnitts im Bereich einer Mündungsöffnung des Umlenkrohrabschnitts in Längsrichtung gegenüber einer von der Behälterwand abgewandten Seite des Umlenkrohrabschnitts verlängert ist. Demnach ist insbesondere eine ovale bzw. elliptische Mündungsöffnung vorgesehen, deren Haupterstreckungsebene gegenüber dem angrenzenden Bereich der Behälterwand geneigt ist.

Um die Entstehung von Turbulenzen beim Austritt des Flüssigkeitsgemischs aus der Mündungsöffnung des Einlaufteils zu vermeiden, ist es von Vorteil, wenn die Mündungsöffnung des Umlenkrohrabschnitts durch eine gebrochene Kante begrenzt ist. Indem die entlang der Mündungsöffnung verlaufende Kante des Einlaufteils gebrochen, d.h. abgeschrägt oder abgerundet, ausgeführt ist, wird die gleichmäßige Strömung des Flüssigkeitsgemischs beim Verlassen des Einlaufteils nicht gestört, so dass optimale Absetzwege in der Abscheidekammer erzielt werden.

Um das Abscheiden der Leichtflüssigkeiten aus dem Flüssigkeitsgemisch weiter zu verbessern, ist es günstig, wenn zumindest der Umlenkrohrabschnitt einen sich in Strömungsrichtung erweiternden Querschnitt aufweist, wobei sich die Querschnittsfläche vorzugsweise um zwischen 0,5 und 1,2 %/cm entlang der Längserstreckungsachse des Umlenkrohrabschnitts erweitert. Demnach nimmt die Querschnittsfläche des Umlenkrohrabschnitts in Strömungsrichtung des Flüssigkeitsgemischs zu, wodurch die Strömungsgeschwindigkeit des Flüssigkeitsgemischs beim Durchströmen des Umlenkrohrabschnitts verringert wird. Dies wirkt sich vorteilhaft auf die erwünschte gleichmäßige, annähernd laminare Strömung des Flüssigkeitsgemischs in Umfangsrichtung der Behälterwand aus.

Zur Erzielung eines verschleissarmen, stabilen Einlaufteils und optimaler Strömungswege ist es günstig, wenn das Einlaufrohrknie und der Umlenkrohrabschnitt einstückig, insbesondere aus einem Kunststoffmaterial, vorzugsweise Polyethylen, gebildet sind. Durch die einstückige Ausbildung des Einlaufteils wird einer Schädigung des Einlaufteils durch undicht gewordene Verbindungsstellen, wie Schweißnähten etc., vorgebeugt. Zudem wird ein weitestgehend störungsfreies Durchströmen des Einlaufteils ermöglicht, so dass keine bzw. lediglich sehr geringe Turbulenzen im strömenden Flüssigkeitsgemisch entstehen. Die Herstellung des Einlaufteils aus einem Kunststoffmaterial ist zur Ausbildung des vergleichsweise kompliziert geformten Umlenkrohrabschnitts besonders gut geeignet. Zudem werden Korrosionsschäden vermieden, welche bei metallischen Zulaufteilen im Dauereinsatz auftreten können.

Für die Herstellung eines nahtlosen bzw. unterbrechungsfreien Einlaufteils ist es günstig, wenn das Einlaufrohrknie und der Umlenkrohrabschnitt durch Rotationsformen hergestellt sind. Dieses Verfahren wird vorzugsweise in Verbindung mit einer rechnergestützten Steuerung durchgeführt, die auf die Ergebnisse von zuvor durchgeführten Computersimulationen zurückgreifen kann, mit denen eine hinsichtlich der gewünschten Strömungsverhältnisse optimierte Geometrie des Einlaufteils ermittelt wurde.

Um den Einlaufteil mit verschiedenen Flüssigkeitsabscheidern verwenden zu können, ist es von Vorteil, wenn der Umlenkrohrabschnitt insbesondere als Rillen ausgebildete Schnittmarkierungen zur Anpassung an unterschiedliche Behälterdurchmesser aufweist. Demnach kann der Umlenkrohrabschnitt des Einlaufteils rasch und unkompliziert an die Dimensionen des Flüssigkeitsabscheiders angepasst werden, indem der über die passende Schnittmarkierung hinausragende Teil des Endabschnitts des Umlenkrohrabschnitts an der Schnittmarkierung abgetrennt wird. Die Schnittmarkierungen entsprechen somit jeweils unterschiedlichen Modellen des Flüssigkeitsabscheiders, die sich durch ihre Abmessungen bzw. Innendurchmesser unterscheiden. Je nach Durchmesser des mit dem Einlaufteil auszustattenden Flüssigkeitsabscheiders wird der Umlenkrohrabschnitt des Einlaufteils entsprechend gekürzt. Dies kann vorteilhafterweise auch erst bei der Montage vor Ort erfolgen, so dass für sämtliche Modelle des Flüssigkeitsabscheiders dasselbe Einlaufteil mit den passenden Schnittmarkierungen ausgeliefert werden kann. Zur Ausbildung der Schnittmarkierungen sind insbesondere umlaufende Materialschwächungen in der Art von Rillen etc. im Bereich des Endabschnitts des Umlenkrohrabschnitts vorgesehen.

Bei dem Flüssigkeitsabscheider der eingangs angeführten Art werden die mit dem erfindungsgemäßen Einlaufteil erzielbaren Vorteile genutzt, so dass zwecks Vermeidung von Wiederholungen auf die vorstehenden Erläuterungen verwiesen wird.

Die Erfindung wird nachstehend anhand von in der Zeichnung dargestellten bevorzugten Ausführungsbeispielen, auf die sie jedoch nicht beschränkt sein soll, noch näher erläutert. Im Einzelnen zeigen in der Zeichnung:
Fig. 1 eine teilweise geschnittene perspektivische Ansicht eines Leichtflüssigkeitsabscheiders mit einem Einlaufteil zum Einleiten eines Flüssigkeitsgemischs;
Fig. 2 bzw. Fig 3. jeweils eine weitere Ansicht des in Fig. 1 dargestellten Leichtflüssigkeitsabscheiders;
Fig. 4. bzw. Fig. 5 jeweils eine perspektivische Ansicht des aus den Fig. 1 bis 3 ersichtlichen Einlaufteils;
Fig. 6 bzw. Fig. 7 jeweils eine perspektivische Ansicht des Einlaufteils im Wesentlichen entsprechend den Fig. 4 bzw. Fig. 5, wobei der Einlaufteil an einer Schnittmarkierung gekürzt wurde;
Fig. 8 eine im Wesentlichen Fig. 3 entsprechende Ansicht eines Leichtflüssigkeitsabscheiders, bei dem zur Anpassung an einen vergleichsweise geringen Innendurchmesser ein gekürztes Einlaufteil gemäß Fig. 6 bzw. Fig. 7 vorgesehen ist;
Fig. 9 bzw. Fig. 10 jeweils eine Ansicht eines zum Einbau in den Leichtflüssigkeitsabscheider gemäß den Fig. 1 bis 3 bzw. 8 vorgesehenen Koaleszenz-Abscheiders mit einem Auslaufteil zum Ausleiten der gereinigten Flüssigkeit.

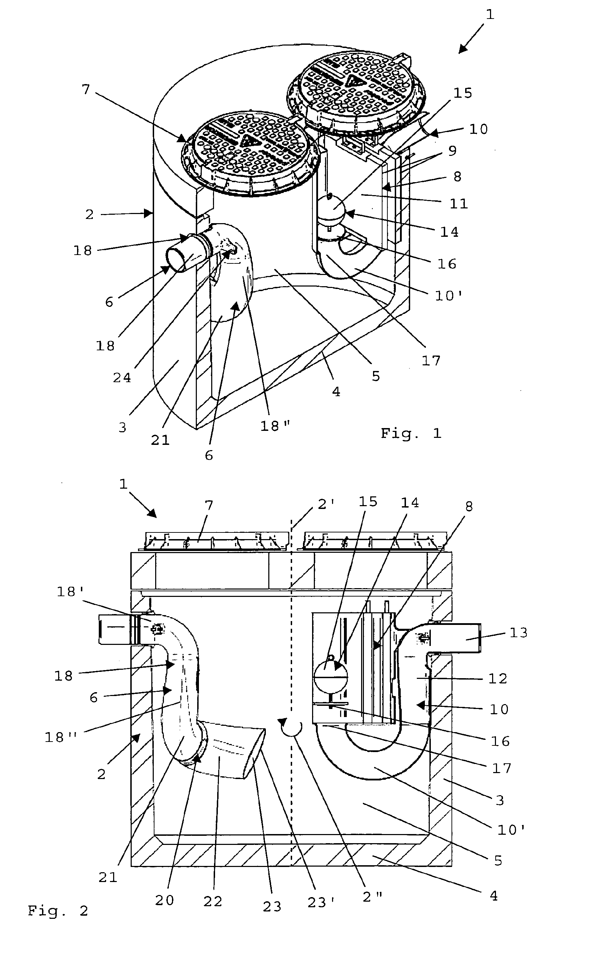

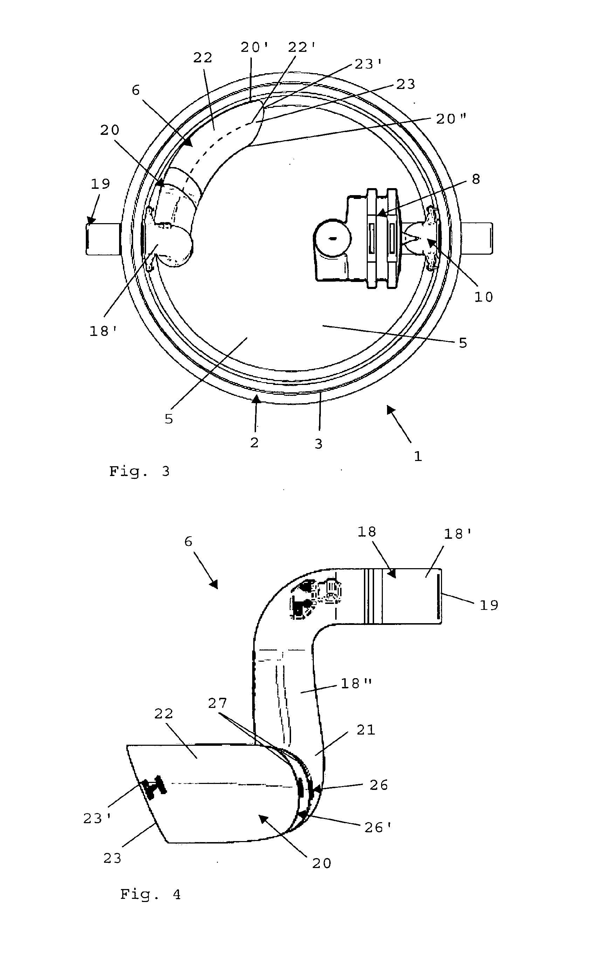

In den Fig. 1 bis 3 ist jeweils ein Leichtflüssigkeitsabscheider 1 zum Reinigen von Abwässern gezeigt. Derartige Leichtflüssigkeitsabscheider 1 werden beispielsweise in Tankstellen, Werkstätten, Umfüllstationen etc. eingesetzt, um ein Flüssigkeitsgemisch von mineralischen Leichtflüssigkeiten zu befreien, die nicht unbehandelt in das Kanalnetz eingespeist werden dürfen. Die abzuscheidenden mineralischen Leichtflüssigkeiten umfassen insbesondere Öle, Treibstoffe etc.. Der Leichtflüssigkeitsabscheider 1 weist einen aus Beton bzw. Stahlbeton gefertigten Behälter 2 auf, in dem das zur Reinigung vorgesehene Flüssigkeitsgemisch gesammelt wird. Wie insbesondere aus Fig. 2 und Fig. 3 ersichtlich, weist der Behälter 2 eine zylindrische Behälterwand 3 auf, die in ihrem Inneren mit einem Boden 4 eine Abscheidekammer 5 einschließt. Die Abscheidekammer 5 ist einerseits als Schlammfang zum Abscheiden von im Flüssigkeitsgemisch enthaltenen Feststoffpartikeln, wie Sandteilchen etc., ausgebildet, die im Betrieb auf den Boden 4 absinken. Das Abscheiden der Leichtflüssigkeiten in der Abscheidekammer 5 des Leichtflüssigkeitsabscheiders 1 beruht auf dem Schwerkraftprinzip, wobei spezifisch leichtere Anteile des Flüssigkeitsgemischs an die Oberfläche der im Behälter 2 des Leichtflüssigkeitsabscheiders 1 vorgehaltenen Flüssigkeitssäule aufsteigen und somit von den darunterliegenden Schichten spezifisch schwererer Flüssigkeiten, d.h. hauptsächlich Wasser, physikalisch getrennt werden.

Das mit mineralischen Leichtflüssigkeiten verunreinigte Flüssigkeitsgemisch wird über ein Einlaufteil 6 in die Abscheidekammer 5 des Behälters 2 eingeleitet. Der Leichtflüssigkeitsabscheider 1 ist einerseits als sogenannter Klasse II-Abscheider ausgebildet, mit dem der überwiegende Anteil von grob dispers gemischten Leichtflüssigkeitströpfchen abgeschieden wird, die eine Partikelgröße von > 1 µm aufweisen. Partikel dieser Größenordnung weisen im Flüssigkeitsgemisch eine zur Konzentration an der Oberfläche der Flüssigkeitssäule ausreichende Steiggeschwindigkeit auf. Der auf dem spezifisch schwereren Trägermedium Wasser (bzw. anderen Schwerflüssigkeiten) aufschwimmende grob dispers gemischte Anteil der Leichtflüssigkeiten kann über einen geeigneten Wartungsdeckel 7 entfernt bzw. abgesaugt werden.

Das Flüssigkeitsgemisch enthält zudem kolloid dispers gelöste Leichtflüssigkeitspartikel, die aufgrund ihrer geringen Größe von 1 nm bis 1 µm sehr geringe Steiggeschwindigkeiten aufweisen und somit nur unzureichend an der Oberfläche der Flüssigkeitssäule konzentriert werden. Um auch diese Feinsttröpfchen aus dem Flüssigkeitsgemisch abscheiden zu können, ist zudem ein sogenannter Klasse I- oder Koaleszenz-Abscheider 8 vorgesehen, der auf dem Prinzip der Koaleszenz bzw. dem Zusammenfließen von kolloidalen Partikeln beruht. Zu diesem Zweck weist der Koaleszenz-Abscheider 8 Koaleszenzeinsätze 9 auf, an denen die Feinsttröpfchen anhaften. Die Feinsttröpfchen fügen sich.dabei zu größeren Tropfen zusammen, bis die Haftfähigkeit des entstandenen Ölfilms überschritten wird und sich ein vergleichsweise großer Öltropfen löst, der zur Oberfläche aufsteigt. Der an der Oberfläche gesammelte Leichtflüssigkeitsfilm kann anschließend über den Wartungsdeckel 7 aus dem Behälter 2 entfernt bzw. abgesaugt werden. Zur Unterstützung der Koaleszenz ist der Koaleszenzeinsatz 9 als Gewebe ausgebildet, das eine große Oberfläche aufweist. Innerhalb des Gewebes entstehen Mikroturbulenzen, welche die Leichtflüssigkeitströpfchen von ihrer Hauptströmungsrichtung ablenken und so zum Verschmelzen zwingen. Zudem wird durch das Gewebe die Strömungsenergie stark vermindert, so dass ein beruhigter Strömungsbereich erzeugt wird, der ein Aufsteigen der konzentrierten Leichtflüssigkeitströpfchen an die Oberfläche erleichtert.

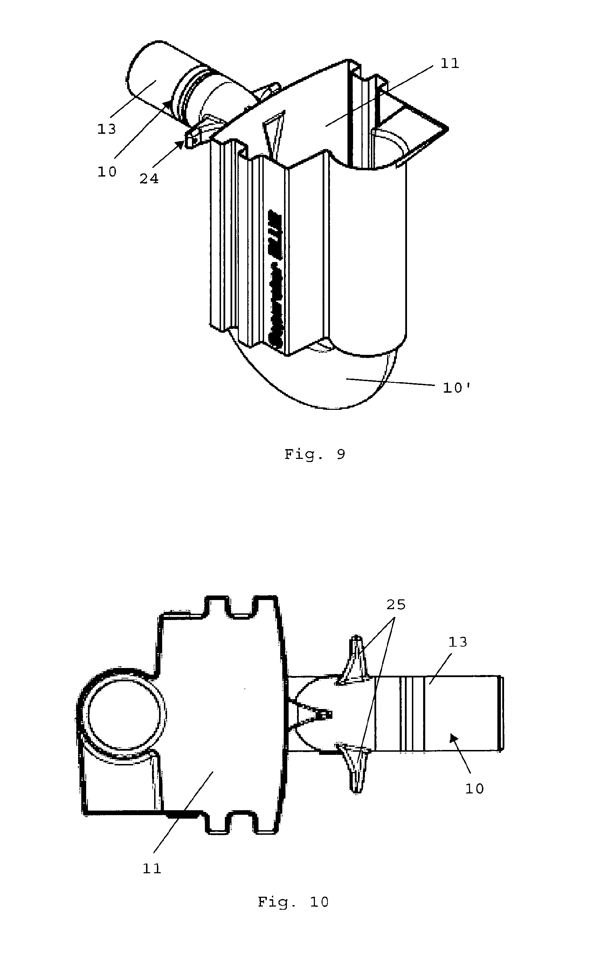

Wie insbesondere aus den Fig. 9 und 10 ersichtlich, weist der Koaleszenz-Abscheider 8 ein rohrförmiges Auslaufteil 10 auf, mit dem die gereinigte Flüssigkeit aus dem Behälter 2 abgeleitet werden kann. Das Auslaufteil 10 weist einen U-förmigen Abschnitt 10' auf, der an einen Innenraum 11 des Auslaufteils 10 anschließt. Die gereinigte Flüssigkeit wird im Anschluss an den U-förmigen Abschnitt 10' über einen im Wesentlichen vertikal angeordneten Abschnitt 12 in einen horizontalen Abschnitt 13 geleitet, der aus dem Behälter 2 führt und mit einer (nicht dargestellten) Kanalleitung verbindbar ist. Um das ungewollte Abfließen von Leichtflüssigkeiten in das Auslaufteil 10 zu verhindern, ist eine insbesondere aus Fig. 2 ersichtliche selbsttätige Verschlusseinrichtung 14 vorgesehen. Bei der gezeigten Ausführung ist die Verschlusseinrichtung 14 als Schwimmer 15 ausgebildet, der auf eine den abzuscheidenden Leichtflüssigkeiten entsprechende Dichte, beispielsweise 0,85 g/cm³, ausgerichtet ist. Wenn die Dichte des Flüssigkeitsgemischs in der Abscheidekammer 5 diesen Wert überschreitet, sinkt der Schwimmer 15 ab, wobei eine Platte 16 mitgenommen wird, die eine Eintrittsöffnung 17 des Auslaufteils 10 verschließt. Die Dichte des Flüssigkeitsgemischs, bei welcher die Verschlusseinrichtung 14 die Eintrittsöffnung 17 des Einlaufteils 10 verschließen soll, kann je nach Bedarf mit (nicht dargestellten) Tarierplatten eingestellt werden.

Die physikalische Trennung der schwer mischbaren und unterschiedliche spezifische Dichten aufweisenden Flüssigkeitsanteile funktioniert bei bekannten Leichtflüssigkeitsabscheidern 1 mit Koaleszenz-Abscheidern 8 grundsätzlich sehr gut. Allerdings ist zu beachten, dass im Betrieb lange Abscheidezeiten eingehalten werden müssen, bis das Flüssigkeitsgemisch in der Abscheidekammer 5 einen Gleichgewichtszustand erreicht, bei dem die Phasen unter Ausbildung einer klar definierten Grenzfläche getrennt sind. Vor dem Erreichen des Gleichgewichtszustands wird lediglich eine instabile Emulsion ohne klar definierte Grenzfläche zwischen den einzelnen Phasen ausgebildet, wodurch die gewünschte Separierung der Flüssigkeitsanteile erschwert bzw. unmöglich gemacht wird. Um die vorgeschriebenen Grenzwerte für die Leichtflüssigkeitsanteile zu erreichen, müssen daher bei bekannten Leichtflüssigkeitsabscheidern 1 lange Wartezeiten in Kauf genommen werden.

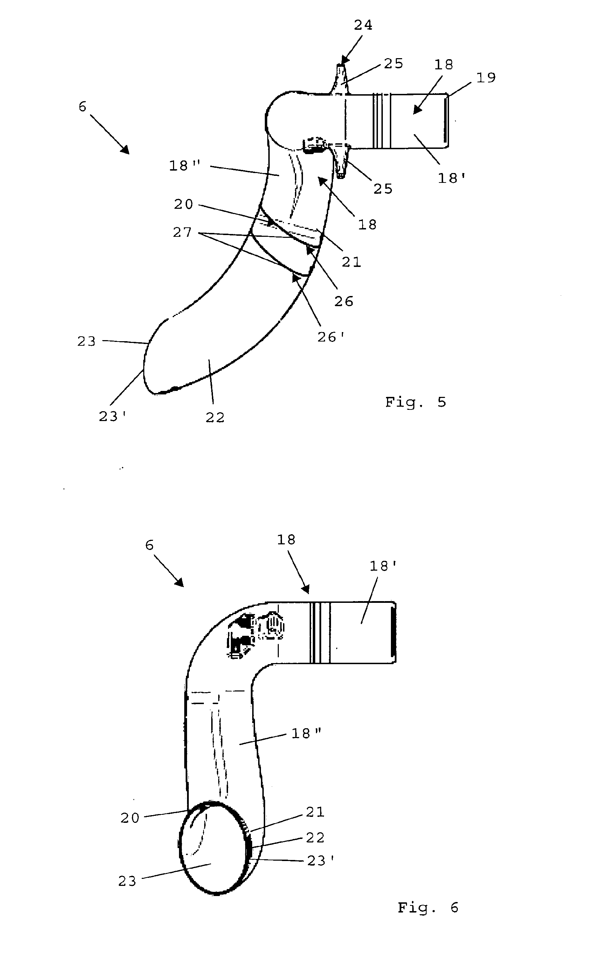

Die Fig. 4 und 5 zeigen ein Ausführungsbeispiel des erfindungsgemäßen Einlaufteils 6, das zur Verbesserung der Effizienz des Leichtflüssigkeitsabscheiders 1 unmittelbar Einfluss auf die Separierung der flüssigen Phasen nimmt. Das Einlaufteil 6 weist ein im Wesentlichen L-förmiges Einlaufrohrknie 18 auf, durch welches das Flüssigkeitsgemisch in den Behälter 2 eingeleitet wird. Hierfür weist das Einlaufrohrknie 18 einen bezüglich der am Leichtflüssigkeitsabscheider 1 montierten Betriebsstellung (vgl. Fig. 1 bis 3) im Wesentlichen horizontal angeordneten Abschnitt 18' auf, der durch die Behälterwand 3 durchragt. Dieser Abschnitt 18' setzt sich im Inneren des Behälters 2 in einen in Richtung des Bodens 4 abgebogenen Abschnitt 18'' in der Art eines Tauchrohrs fort, der in der Betriebsstellung im Wesentlichen vertikal angeordnet ist.

Erfindungsgemäß schließt an das Einlaufrohrknie 18 in Strömungsrichtung ein Umlenkrohrabschnitt 20 an. Der Umlenkrohrabschnitt 20 weist einen an den Abschnitt 18'' des Einlaufrohrknies 18 anschließenden Verbindungsabschnitt 21 auf, mit dem das durch das Einlaufrohrknie 10 im Wesentlichen vertikal in Richtung des Bodens 4 geleitete Flüssigkeitsgemisch im Wesentlichen um 90° in eine Richtung parallel zum Boden 4 bzw. zum angrenzenden Bereich der Behälterwand 3 umgelenkt wird. Auf den Verbindungsabschnitt 21 des Umlenkrohrabschnitts 20 folgt ein Endabschnitt 22, dessen in Fig. 3 eingezeichnete Längserstreckungsachse 22' in der Betriebsstellung des Einlaufteils 6 im Wesentlichen in Umfangsrichtung der zylindrischen Behälterwand 3 verläuft (vgl. insbesondere Fig. 3). Demnach ist der ins Innere des Behälters 2 mündende Endabschnitt 22 des Einlaufteils 6 im Wesentlichen entsprechend der zylindrischen Behälterwand 3 bogenförmig gekrümmt, wobei das Flüssigkeitsgemisch tangential in die Abscheidekammer 5 des Behälters 2 eingeleitet wird. Der Krümmungsradius des Endabschnitts 22 richtet sich dabei nach dem Durchmesser des Behälters 2.

Durch das tangentiale Einleiten des Flüssigkeitsgemischs in die Abscheidekammer 5 wird die im Behälter 2 gesammelte Flüssigkeitssäule in eine Drehbewegung versetzt, so dass das Flüssigkeitsgemisch um eine zentrale Längsachse 2' des Behälters 2 rotiert, wie dies in Fig. 2 mit einem Pfeil 2'' angedeutet wird. Auf diese Weise können die zur Konzentration der Leichtflüssigkeitspartikel an der Flüssigkeitsoberfläche erzielten Absetzwege erheblich verlängert werden. Die Geometrie des Einlaufteils 6 unterstützt somit unmittelbar den Reinigungsvorgang, was gegenüber herkömmlichen Zuläufen, die lediglich einen Geruchsverschluss gegenüber der an den Abschnitt 18' des Einlaufrohrknies 18 angeschlossenen Zulaufleitung (nicht dargestellt) bilden, erhebliche Vorteile bringt. Indem das tangentiale Einleiten des Flüssigkeitsgemischs über das Einlaufteil 6 die Separierung der Phasen verbessert, wird eine sehr effiziente Reinigung des Flüssigkeitsgemischs in gegenüber bekannten Abscheidern erheblich verkürzten Zeitintervallen erzielt.

Wie insbesondere aus Fig. 2 ersichtlich, mündet das Einlaufteil 6 in der Nähe des Bodens 2 in die Abscheidekammer 5. Demnach werden beim Einleiten des Flüssigkeitsgemischs lediglich bodennahe bzw. mittlere Flüssigkeitsschichten der Flüssigkeitssäule in Rotation versetzt, wobei der an der Oberfläche konzentrierte Leichtflüssigkeitsfilm nicht aufgewühlt wird und somit die bereits separierten Anteile des Flüssigkeitsgemischs nicht gestört werden.

Zum Abscheiden der Leichtflüssigkeiten ist es vorteilhaft, dass in der Abscheidekammer 5 eine gleichmäßige, annähernd laminare Strömung des Flüssigkeitsgemischs um die zentrale Achse 2' erzielt wird, so dass möglichst geringe Turbulenzen auftreten, welche den Absetzvorgang beeinträchtigen können. Dies wird beim erfindungsgemäßen Einlaufteil 6 durch eine Reihe von Maßnahmen gewährleistet. Demnach sind das Einlaufrohrknie 18 und der Umlenkrohrabschnitt 20 einstückig aus einem Kunststoffmaterial wie Polyethylen gebildet, um die laminare Strömung störende Verbindungsstellen, wie Schweißnähte etc., zu vermeiden. Das Einlaufteil 6 wird zudem im Herstellungsprozess durch Rotationsformen in eine strömungsoptimierte Geometrie geformt, die zuvor mittels Computersimulationen berechnet wurde. Um das tangentiale, laminare Einströmen des Flüssigkeitsgemischs in die Abscheidekammer 5 zu verbessern, ist weiters eine der Behälterwand 3 zugewandte Seite 20' des Umlenkrohrabschnitts 20 im Bereich einer Mündungsöffnung 23 des Umlenkrohrabschnitts 20 in Längsrichtung gegenüber einer von der Behälterwand 3 abgewandten Seite 20" des Umlenkrohrabschnitts verlängert (vgl. Fig. 3). Demnach weist die Mündungsöffnung 23 eine ovale Gestalt auf, wobei die Haupterstreckungsebene der Mündungsöffnung 23 gegenüber dem angrenzenden Bereich der Behälterwand 3 geneigt ist. Um die Entstehung von Turbulenzen im Bereich der Mündungsöffnung 23 zu vermeiden, ist eine die Mündungsöffnung 23 begrenzende Kante 23' gebrochen bzw. abgeschrägt ausgeführt. Zudem ist eine der Zulaufleitung zugewandte Kante 19 des horizontalen Abschnitts 18' des Einlaufrohrknies 18 - ebenso wie die entsprechenden Kanten des Auslaufteils 10 - gebrochen ausgeführt.

Der Umlenkrohrabschnitt 20 weist einen sich in Strömungsrichtung erweiternden Querschnitt auf. Die Aufweitung des Strömungsquerschnitts bewirkt, dass die Strömungsgeschwindigkeit des Flüssigkeitsstroms im Umlenkrohrabschnitt 20 in Strömungsrichtung, d.h. zur Mündungsöffnung 23 hin, abnimmt. Hierdurch wird die Strömung beruhigt und die Effizienz der Abscheidung der Leichtflüssigkeiten gesteigert. Beim gezeigten Ausführungsbeispiel nimmt die Querschnittsfläche im Wesentlichen um 0,6 %/cm in Richtung der Längserstreckungsachse 22' des Umlenkrohrabschnitts 22 zu. Die Querschnittsfläche des Einlaufteils 6 beträgt am Ende des Einlaufrohrknies 18 bzw. am Anfang des Umlenkrohrabschnitts 20 ungefähr 370 cm² und im Bereich der Mündungsöffnung 23 des Endabschnitts 22 des Einlaufteils 6 ungefähr 490 cm².

Aus Fig. 5 sind zudem Befestigungsmittel 24 zur Befestigung des Einlaufteils 6 an der Behälterwand 3 ersichtlich. Die Befestigungsmittel 24 sind in der Art von Vorsprüngen 25 ausgebildet, die von dem im Betrieb horizontal verlaufenden Abschnitt 18' des Einlaufrohrknies 18 abstehen und über entsprechende (nicht dargestellte) Verbindungsmittel, wie Schrauben etc., an der Behälterwand 3 befestigt werden. Das Auslaufteil 10 weist entsprechende Befestigungsmittel 24, 25 auf.

Wie weiters insbesondere aus Fig. 6 ersichtlich, weist der Umlenkrohrabschnitt 20 des Einlaufteils 6 zudem Schnittmarkierungen 26, 26' zur Anpassung des Einlaufteils 6 an unterschiedliche Durchmesser des Behälters 2 auf. Als Schnittmarkierungen 26, 26' sind Materialschwächungen vorgesehen, welche beim gezeigten Ausführungsbeispiel als umlaufende Rillen 27 gebildet sind, an denen ein für den jeweiligen Leichtflüssigkeitsabscheider 1 nicht benötigtes Vorderstück abgetrennt werden kann. Die Fig. 1 bis 3 zeigen einen Leichtflüssigkeitsabscheider 1 mit einem Behälter 2, der einen vergleichsweise großen Innendurchmesser von beispielsweise 100 cm aufweist. Der in den Fig. 4 und 5 dargestellte, ungekürzte Einlaufteil 6 ist zum tangentialen Einleiten des Flüssigkeitsgemischs in den in den Fig. 1 bis 3 gezeigten Leichtflüssigkeitsabscheider 1 geeignet.

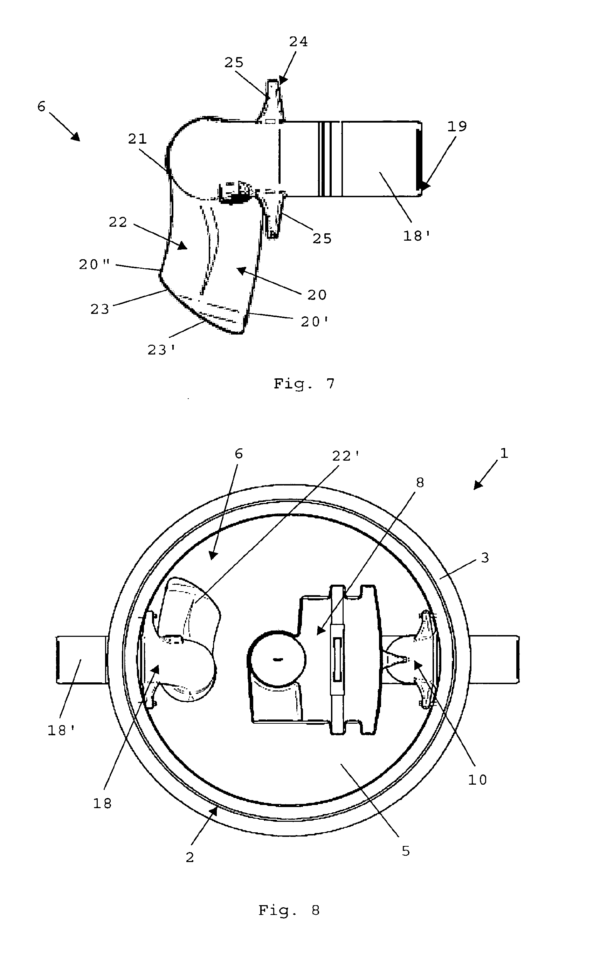

Die Fig. 6 und 7 zeigen jeweils einen an der Schnittmarkierung 26 gekürzten Einlaufteil 6, welcher zum Einbau in den in Fig. 8 dargestellten Leichtflüssigkeitsabscheider 1 vorgesehen ist, dessen Behälter 2 einen Innendurchmesser von ungefähr 100 cm aufweist. Der an der Schnittmarkierung 26 gekürzte Einlaufteil 6 ist an die veränderten Strömungsverhältnisse in dem in Fig. 8 gezeigten, vergleichsweise kleinen Leichtflüssigkeitsabscheider 1 angepasst, so dass auch bei dieser Ausführung ein tangentiales Einströmen des Flüssigkeitsgemischs unter Ausbildung einer gleichmäßigen, annähernd laminaren Strömung erzielt wird. Die Schnittmarkierung 26' ist zur Anpassung des Einlaufteils 6 an einen Leichtflüssigkeitsabscheider 1 mittlerer Größe (in den Fig. nicht dargestellt) vorgesehen. Selbstverständlich ist es denkbar, mittels zusätzlicher Schnittmarkierungen am Umlenkrohrabschnitt 20 des Einlaufteils 6 weitere mögliche Durchmesser des Behälters 2 des Leichtflüssigkeitsabscheiders 1 zu berücksichtigen.

## Patentansprüche

1. Einlaufteil (6) zum Einleiten eines Flüssigkeitsgemischs in einen Leichtflüssigkeitsabscheider (1), der einen Behälter (2) mit einer gekrümmten, insbesondere im Wesentlichen zylindrischen, Behälterwand (3) aufweist, die mit einem Boden (4) eine Abscheidekammer (5) einschließt, mit einem im Wesentlichen L-förmigen Einlaufrohrknie (18), das einen in der Betriebsstellung durch die Behälterwand (3) durchragenden Abschnitt (18') aufweist, an den ein in Richtung des Bodens (4) des Behälters (2) abgebogener Abschnitt (18'') anschließt, **dadurch gekennzeichnet, dass** in Strömungsrichtung an das Einlaufrohrknie (18) ein Umlenkrohrabschnitt (20) anschließt, wobei eine Längserstreckungsachse (22') eines Endabschnitts (22) des Umlenkrohrabschnitts (20) in der Betriebsstellung im Wesentlichen in Umfangsrichtung der Behälterwand (3) verläuft, so dass das Flüssigkeitsgemisch tangential in den Behälter (2) einleitbar ist.

2. Einlaufteil nach Anspruch 1, **dadurch gekennzeichnet, dass** der Endabschnitt (22) des Umlenkrohrabschnitts (20) im Wesentlichen entsprechend der zylindrischen Behälterwand (3) bogenförmig, insbesondere im Wesentlichen kreisbogenförmig, gekrümmt ist.

3. Einlaufteil nach Anspruch 1 oder 2, **dadurch gekennzeichnet, dass** der Umlenkrohrabschnitt (20) im Wesentlichen derart an einen in der Betriebsstellung im Wesentlichen senkrecht angeordneten Abschnitt (18'') des Einlaufrohrknies (18) anschließt, dass das Flüssigkeitsgemisch im Wesentlichen um 90° umgelenkt wird.

4. Einlaufteil nach einem der Ansprüche 1 bis 3, **dadurch gekennzeichnet, dass** eine der Behälterwand (3) zugewandte Seite (20') des Umlenkrohrabschnitts (20) im Bereich einer Mündungsöffnung (23) des Umlenkrohrabschnitts (20) in Längsrichtung gegenüber einer von der Behälterwand (3) abgewandten Seite (20'') des Umlenkrohrabschnitts (20) verlängert ist.

5. Einlaufteil nach Anspruch 4, **dadurch gekennzeichnet, dass** die Mündungsöffnung (23) des Umlenkrohrabschnitts (20) durch eine gebrochene Kante (23') begrenzt ist.

6. Einlaufteil nach einem der Ansprüche 1 bis 5, **dadurch gekennzeichnet, dass** zumindest der Umlenkrohrabschnitt (20) einen sich in Strömungsrichtung erweiternden Querschnitt aufweist, wobei sich die Querschnittsfläche vorzugsweise um zwischen 0,5 und 1,2 %/cm entlang der Längserstreckungsachse des Umlenkrohrabschnitts (20) erweitert.

7. Einlaufteil nach einem der Ansprüche 1 bis 6, **dadurch gekennzeichnet, dass** das Einlaufrohrknie (18) und der Umlenkrohrabschnitt (20) einstückig, insbesondere aus einem Kunststoffmaterial, vorzugsweise Polyethylen, gebildet sind.

8. Einlaufteil nach Anspruch 7, **dadurch gekennzeichnet, dass** das Einlaufrohrknie (18) und der Umlenkrohrabschnitt (20) durch Rotationsformen hergestellt sind.

9. Einlaufteil nach einem der Ansprüche 1 bis 8, **dadurch gekennzeichnet, dass** der Umlenkrohrabschnitt (20) insbesondere als Rillen (27) ausgebildete Schnittmarkierungen (26, 26') zur Anpassung an unterschiedliche Behälterdurchmesser aufweist.

10. Leichtflüssigkeitsabscheider mit einem Behälter (2), der eine gekrümmte, insbesondere im Wesentlichen zylindrische, Behälterwand (3) aufweist, die mit einem Boden (4) eine Abscheidekammer (5) einschließt, **dadurch gekennzeichnet, dass** ein nach einem der Ansprüche 1 bis 9 ausgebildetes Einlaufteil (6) vorgesehen ist.
